# EUROPEAN PATENT SPECIFICATION

(11) **EP 4 116 391 B1**
(45) Date of publication and mention of the grant of the patent: **08.10.2025**
(21) Application number: 21191201.9
(22) Date of filing: 13.08.2021
(51) Int. Cl.: C09K 5/10, C07F 9/11, C07F 9/12, H01M 10/613, H01M 10/625, H01M 10/6567, H01M 10/6568

(54) **PHOSPHATE TESTER HEAT TRANSFER FLUIDS AND THEIR USE IN AN IMMERSION COOLING SYSTEM**
PHOSPHATESTER-WÄRMEÜBERTRAGUNGSFLÜSSIGKEITEN UND DEREN VERWENDUNG IN EINEM TAUCHKÜHLSYSTEM
FLUIDES DE TRANSFERT DE CHALEUR À BASE D'ESTERS DE PHOSPHATE ET LEUR UTILISATION DANS UN SYSTÈME DE REFROIDISSEMENT PAR IMMERSION

(30) Priority: 07.07.2021 US 202163219227 P
(43) Date of publication of application: 11.01.2023
(73) Proprietor: LANXESS Corporation, Pittsburgh, PA 15275-1112 (US)
(72) Inventor: Fletschinger, Dr. Michael, 8303 Illnau (CH); Milne, Neal, Cheshire, CH4 7LS (GB); Benanti, Travis, Connecticut, 06032 (US)
(74) Representative: Wichmann, Birgid

(56) References cited:
- WO-A1-2014/013981
- US-A1- 2015 188 203
- US-A1- 2018 233 791

## Description

The present disclosure relates to a heat transfer fluid for immersion cooling of electrical componentry and an immersion cooling system employing the heat transfer fluid. The heat transfer fluid comprises a mixture of phosphate esters, as described herein. The mixture of phosphate esters exhibits favorable properties in a circulating immersion cooling system, such as low flammability, low pour point, high electrical resistivity and low viscosity for pumpability.

Electrical componentry that use, store and/or generate energy or power can generate heat. For example, battery cells, such as lithium-ion batteries, generate large amounts of heat during charging and discharging operations. Traditional cooling systems employ air cooling or indirect liquid cooling. Commonly, water/glycol solutions are used as heat transfer fluids to dissipate heat via indirect cooling. In this cooling technique, the water/glycol coolant flows through channels, such as jackets, around the battery modules or through plates within the battery framework. The water/glycol solutions, however, are highly conductive and must not contact the electrical componentry, such as through leakage, for risk of causing short circuits, which can lead to heat propagation and thermal runaway. In addition, questions remain whether indirect cooling systems can adequately and efficiently remove heat under the increasing demands for high loading (fast charging), high capacity batteries.

Cooling by immersing electrical componentry into a coolant is a promising alternative to traditional cooling systems. For example, US 2018/0233791 A1 discloses a battery pack system to inhibit thermal runaway wherein a battery module is at least partially immersed in a coolant in a battery box. The coolant may be pumped out of the battery box, through a heat exchanger, and back into the battery box. As the coolant, trimethyl phosphate and tripropyl phosphate are mentioned, among other chemistries, or triphenyl phosphate, trioctyl phosphate (see US 2015/188203) or a phosphate ester which is disclosed in WO 2014/013981. However, as shown in the present application, a trimethyl phosphate fluid or tripropyl phosphate fluid exhibits a low direct-current (DC) resistivity, and each exhibits a low flash point such that the flammability of each fluid renders it unsuitable
A need exists for the development of heat transfer fluids, particularly for immersion cooling systems, having low flammability, low pour point, high electrical resistivity and low viscosity.

To fulfill this need, new heat transfer fluids are disclosed herein comprising certain mixtures of phosphate esters. Also disclosed is an immersion cooling system using the presently disclosed heat transfer fluids.

In accordance with the present disclosure, a heat transfer fluid for immersion cooling of electrical componentry comprises
(a) one or more than one phosphate ester of formula (I) 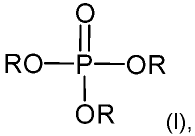 where each R is independently C₆₋₁₈ alkyl, and
(b) one or more than one phosphate ester of formula (II) 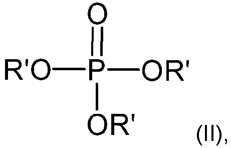 where each R' is independently chosen from unsubstituted phenyl and C₁₋₁₂ alkyl-substituted phenyl.

Also disclosed is an immersion cooling system comprising electrical componentry, a heat transfer fluid of the present disclosure, and a reservoir, wherein the electrical componentry is at least partially immersed in the heat transfer fluid within the reservoir, and a circulating system capable of circulating the heat transfer fluid out of the reservoir, through a circulating pipeline of the circulating system, and back into the reservoir.

The present disclosure also includes a method of cooling electrical componentry comprising at least partially immersing electrical componentry in a heat transfer fluid of the present disclosure within a reservoir, and circulating the heat transfer fluid out of the reservoir, through a circulating pipeline of a circulation system, and back into the reservoir.

The heat transfer fluid, system and method of the present disclosure are suitable for cooling a wide variety of electrical componentry, and particularly in the cooling of battery systems.

The preceding summary is not intended to restrict in any way the scope of the claimed invention. In addition, it is to be understood that both the foregoing general description and the following detailed description are exemplary and explanatory only and are not restrictive of the invention, as claimed.

### BRIEF DESCRIPTION OF THE FIGURES

FIG. 1 and FIG. 2 each shows a block flow diagram of an exemplary immersion cooling system according to the present disclosure.
FIG. 3 and FIG. 4 are schematic diagrams of exemplary immersion cooling systems according to the present disclosure.

Unless otherwise specified, the word "a" or "an" in this application means "one or more than one".

A heat transfer fluid for immersion cooling of electrical componentry comprises
(a) one or more than one phosphate ester of formula (I) 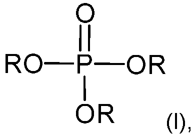 where each R is independently C₆₋₁₈ alkyl, and
(b) one or more than one phosphate ester of formula (II) 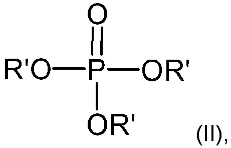 where each R' is independently chosen from unsubstituted phenyl and C₁₋₁₂ alkyl-substituted phenyl.

The ratio by weight of the phosphate ester component (a) to the phosphate ester component (b) in the heat transfer fluid often ranges from 12:1 to 1:12, often 10:1 to 1:10, such as 8:1 to 1:8, 5:1 to 1:5 or 3:1 to 1:3.

While the heat transfer fluid may contain phosphate esters other than those of formulas (I) and (II), the phosphate ester components (a) and (b) typically collectively make up more than 50% by weight based on the total weight of all phosphate esters in the heat transfer fluid, e.g., at least 60 %, at least 70%, at least 80%, at least 90%, at least 95% or at least 99% by weight of all phosphate esters in the heat transfer fluid.

In formula (I) of phosphate ester component (a), each R may, but need not, be the same.

In formula (II) of phosphate ester component (b), each R' may, but need not, be the same. In some embodiments, each R' in formula (II) is independently chosen from C₁₋₁₂ alkyl-substituted phenyl. In further embodiments, one R' group is C₁₋₁₂ alkyl-substituted phenyl, and the remaining two R' groups are unsubstituted phenyl, or two R' groups are independently chosen from C₁₋₁₂ alkyl-substituted phenyl and the remaining R' group is unsubstituted phenyl. In some embodiments, the two R groups chosen from C₁₋₁₂ alkyl-substituted phenyl are the same.

R as "C₆₋₁₈ alkyl" in formula (I) may be a straight or branched chain alkyl group having the specified number of carbon atoms. Often, R as "C₆₋₁₈ alkyl" has at least 8 carbon atoms. Preferably, R as C₆₋₁₈ alkyl is C₆₋₁₂ or C₈₋₁₂ alkyl or C₆₋₁₀ or C₈₋₁₀ alkyl. Examples of unbranched alkyl groups include n-hexyl, n-heptyl, n-octyl, n-nonyl, n-decyl, n-undecyl, and n-dodecyl. Examples of branched alkyl groups include 2-methylpentyl, 2-ethylbutyl, 2,2-dimethylbutyl, 6-methylheptyl, 2-ethylhexyl, t-octyl, 3,5,5-trimethylhexyl, 7-methyloctyl, 2-butylhexyl, 8-methylnonyl, 2-butyloctyl, 11-methyldodecyl and the like. Examples of linear alkyl and branched alkyl groups also include moieties commonly called isononyl, isodecyl, isotridecyl and the like, where the prefix "iso" is understood to refer to mixtures of alkyls such as those derived from an oxo process.

R' as "C₁₋₁₂ alkyl-substituted phenyl" in formula (II) refers to a phenyl group substituted by a C₁₋₁₂ alkyl group. The alkyl group may be a straight or branched chain alkyl group having the specified number of carbon atoms. More than one alkyl group may be present on the phenyl ring (e.g., phenyl substituted by two alkyl groups or three alkyl groups ). Often, however, the phenyl is substituted by one alkyl group (i.e., mono-alkylated). Preferably, the C₁₋₁₂ alkyl is chosen from C₁₋₁₀ or C₃₋₁₀ alkyl, more preferably C₁₋₈ or C₃₋₈ alkyl, or C₁₋₆ or C₃₋₆ alkyl. Examples of such alkyl groups include methyl, ethyl, n-propyl, isopropyl, n-butyl, isobutyl, sec-butyl, t-butyl, pentyl, isopentyl, t-pentyl, 2-methylbutyl, n-hexyl, 2-methylpentyl, 2-ethylbutyl, 2,2-dimethylbutyl, 6-methylheptyl, 2-ethylhexyl, isooctyl, t-octyl, and isononyl, 3,5,5-trimethylhexyl, 2-butylhexyl, isodecyl, and 2-butyloctyl and the like. The alkylating agents may include olefins derived from cracking of naphtha, such as propylene, butylene, diisobutylene, and propylene tetramer. Said alkyl substitution on the phenyl ring may be at the ortho-, meta-, or para- position, or a combination thereof. Often, the alkyl substitution is at the para-position or predominantly at the para-position.

Component (a) may comprise a mixture of phosphate ester compounds of formula (I). For example, component (a) may comprise an isomeric mixture of compounds of formula (I), e.g., such phosphate esters containing branched alkyl isomers, such as derived from a mixture of isomers of branched aliphatic alcohols.

Often, component (b) is a mixture of phosphate esters of formula (II). For example, component (b) may comprise an isomeric mixture of phosphate esters of formula (II), e.g., such phosphate esters containing branched alkyl isomers, such as derived from a mixture of isomers of branched alkylated phenols.

In further embodiments, component (b) comprises an isomeric mixture of phosphate esters of formula (II) containing ortho-, meta-, and/or para- isomers of C₁₋₁₂ alkyl-substituted phenyl, such as trixylenyl phosphate, tricresyl phosphate and the like.

In many embodiments, component (b) comprises two or more phosphate esters of formula (II) differing in the number of R' groups that are C₁₋₁₂ alkyl-substituted phenyl. For example, the mixture of compounds of formula (II) may comprise at least two, often three or all four, from the group chosen from mono(alkylphenyl) diphenyl phosphate, di(alkylphenyl) monophenyl phosphate, tri(alkylphenyl) phosphate, and triphenyl phosphate, where "alkylphenyl" is C₁₋₁₂ alkyl-substituted phenyl as described herein.

Such mixture of compounds of formula (II) may comprise, for example,
(a) from about 30 wt% to about 95 wt% mono(alkylphenyl) diphenyl phosphate,
(b) from about 5 wt% to about 50 wt% di(alkylphenyl) monophenyl phosphate,
(c) from about 0 wt%, from about 2 or from about 5 wt% to about 20 wt% of tri(alkylphenyl) phosphate, and
(d) from about 0 wt% or from about 2 wt% to about 30 wt% of triphenyl phosphate, where the weight percentages are based on the total weight of all phosphate esters of formula (II).

In many embodiments, such mixture of compounds of formula (I) comprises
(a) from about 60 wt% to about 95 wt%, such as from about 65 or from about 70 wt% to about 85 or to about 80 wt%, mono(alkylphenyl) diphenyl phosphate,
(b) from about 5 wt% to about 35 wt%, such as from about 10 or from about 15 wt% to about 30 or to about 25 wt%, di(alkylphenyl) monophenyl phosphate,
(c) from about 0 or from about 1 wt% to about 5 or to about 4 wt%, tri(alkylphenyl) phosphate, and
(d) from about 0 or from about 1 wt% to about 15 wt%, such as from about 1 or from about 2 wt% to about 10 or to about 5 wt%, triphenyl phosphate, where the weight percentages are based on the total weight of all phosphate esters of formula (II).

In many embodiments, such mixture of compounds of formula (I) comprises
(a) from about 30 wt% to about 60 wt%, such as from about 35 or from about 40 wt% to about 55 or to about 50 wt%, mono(alkylphenyl) diphenyl phosphate,
(b) from about 20 wt% to about 50 wt%, such as from about 25 or from about 30 wt% to about 45 or to about 40 wt%, di(alkylphenyl) monophenyl phosphate,
(c) from about 2 wt% to about 20 wt%, such as from about 2 or about 4 wt% to about 15 or to about 10 wt%, tri(alkylphenyl) phosphate, and
(d) from about 5 or from about 10 wt% to about 30 or to about 25 wt%, such as from about 10 or from about 15 wt% to about 25 or to about 20 wt%, triphenyl phosphate where the weight percentages are based on the total weight of all phosphate esters of formula (II).

The heat transfer fluid of the present disclosure may also include one or more other base oils, such as mineral oils, polyalphaolefins, esters, etc. The other base oil(s) and amounts thereof should be chosen to be consistent with the properties suitable for the circulating immersion cooling fluid as described herein. Typically, the phosphate ester components (a) and (b) collectively make up more than 50% by weight of the heat transfer fluid. For example, in many embodiments, the phosphate ester components (a) and (b) collectively are at least 60%, at least 70%, at least 80%, at least 90%, at least 95%, or at least 99% by weight of the heat transfer fluid.

The heat transfer fluid of the present disclosure may further comprise one or more performance additives. Examples of such additives include, but are not limited to, antioxidants, metal deactivators, flow additives, corrosion inhibitors, foam inhibitors, demulsifiers, pour point depressants, and any combination or mixture thereof. Fully-formulated heat transfer fluids typically contain one or more of these performance additives, and often a package of multiple performance additives. Often, one or more performance additives are present at 0.0001 wt% up to 3 wt%, or 0.05 wt% up to 1.5 wt%, or 0.1 wt% up to 1.0 wt%, based on the weight of the heat transfer fluid.

The heat transfer fluid may consist essentially of the phosphate ester components (a) and (b) and optionally one or more performance additives. In some embodiments, the heat transfer fluid consists of the phosphate ester components (a) and (b) and optionally one or more performance additives.

The phosphate esters of the present disclosure, including mixtures thereof, are known or can be prepared by known techniques. For example, trialkyl phosphate esters are often prepared by the addition of alkyl alcohol to phosphorous oxychloride or phosphorous pentoxide. Alkylated triphenyl phosphate esters, including mixtures thereof, may be prepared according to a variety of known techniques, such as the addition of alkylated phenol to phosphorous oxychloride. Known processes are described, e.g., in U.S. Patent Nos. 2,008,478, 2,868,827, 3,859,395, 5,206,404 and 6,242,631.

The phosphate ester components (a) and (b) may be mixed according to any suitable technique for blending such phosphate ester components.

The physical properties of the presently disclosed heat transfer fluid may be adjusted or optimized at least in part based on the extent of alkylation in the phosphate ester components (a) and (b) and/or based on the proportions by weight of the phosphate ester component (a) to the phosphate ester component (b).

Typically, the heat transfer fluid of the present disclosure has a flash point according to ASTM D92 of ≥ 190 °C, preferably ≥ 200 °C ; a kinematic viscosity measured at 40 °C according to ASTM D445 of less than 50×10⁻⁶ m²/s (50 cSt), preferably ≤ 40×10⁻⁶ m²/s (40 cSt) or ≤ 35×10⁻⁶ m²/s (35 cSt), more preferably ≤ 30×10⁻⁶ m²/s (30 cSt); a pour point according to ASTM D5950 of ≤ -20°C, preferably ≤ -25 °C, more preferably ≤ -30 °C; and a DC resistivity measured at 25 °C according to IEC 60247 of > 0.25 GOhm-cm, preferably > 0.5 GOhm-cm, > 1 GOhm-cm, or > 5 GOhm-cm.

The immersion cooling system of the present disclosure comprises electrical componentry, a heat transfer fluid as described herein, and a reservoir, wherein the electrical componentry is at least partially immersed in the heat transfer fluid within the reservoir, and a circulating system capable of circulating the heat transfer fluid out of the reservoir, through a circulating pipeline of the circulating system, and back into the reservoir.

Electrical componentry includes any electronics that generate thermal energy in need of dissipation for safe usage. Examples include batteries, fuel cells, aircraft electronics, computer electronics such as microprocessors, un-interruptable power supplies (UPSs), power electronics (such as IGBTs, SCRs, thyristors, capacitors, diodes, transistors, rectifiers and the like), invertors, DC to DC convertors, chargers (e.g., within loading stations or charging points), phase change invertors, electric motors, electric motor controllers, DC to AC invertors, and photovoltaic cells.

The system and method of the present disclosure is particularly useful for cooling battery systems, such as those in electric vehicles (including passenger and commercial vehicles), e.g., in electric cars, trucks, buses, industrial trucks (e.g., forklifts and the like), mass transit vehicles (e.g., trains or trams) and other forms of electric powered transportation.

Typically, electrified transportation is powered by battery modules. A battery module may encompass one or more battery cells arranged or stacked relative to one another. For example, the module can include prismatic, pouch or cylindrical cells. During charging and discharging (use) operations of the battery, heat is typically generated by the battery cells, which can be dissipated by the immersion cooling system. Efficient cooling of the battery via the immersion cooling system allows for fast charge times at high loadings, while maintaining safe conditions and avoiding heat propagation and thermal runaway. Electrical componentry in electric powered transportation also include electric motors, which can be cooled by the immersion cooling system.

In accordance with the present disclosure, the electrical componentry is at least partially immersed in the heat transfer fluid within a reservoir. Often, the electrical componentry is substantially immersed or fully immersed in the heat transfer fluid, such as immersing (in the case of a battery module) the battery cell walls, tabs and wiring. The reservoir may be any container suitable for holding the heat transfer fluid in which the electrical componentry is immersed. For example, the reservoir may be a container or housing for the electrical componentry, such as a battery module container or housing.

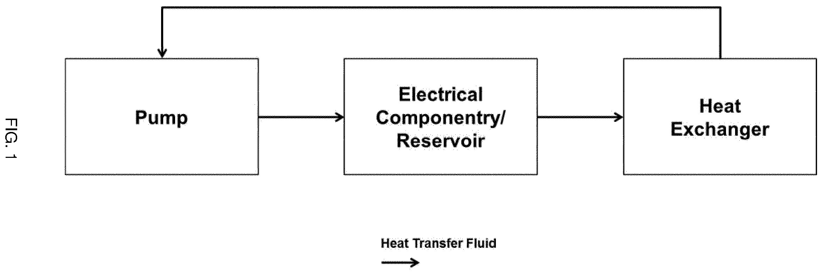

The immersion cooling system further comprises a circulating system capable of circulating the heat transfer fluid out of the reservoir, through a circulating pipeline of the circulating system, and back into the reservoir. Often, the circulating system includes a pump and a heat exchanger. In operation, for example as shown in FIG. 1, the circulating system may pump heated heat transfer fluid out of the reservoir through a circulating pipeline and through a heat exchanger to cool the heat transfer fluid and pump the cooled heat transfer fluid through a circulating pipeline back into the reservoir. In this manner, during operation of the electrical componentry (which is at least partially immersed in the heat transfer fluid within the reservoir), such as during charging or discharging operations of a battery, the immersion cooling system is operated to absorb heat generated by the electrical componentry, to remove heat transfer fluid that has been heated by the electrical componentry for cooling in the heat exchanger, and to circulate the cooled heat transfer fluid back into the reservoir.

The heat exchanger may be any heat transfer unit capable of cooling the heated heat transfer fluid to a temperature suitable for the particular application. For example, the heat exchanger may use air cooling (liquid to air) or liquid cooling (liquid to liquid). The heat exchanger, for example, may be a shared heat transfer unit with another fluid circuit within the electrical equipment or device, such as a refrigeration/air conditioning circuit in an electric vehicle. The circulation system may flow the heat transfer fluid through multiple heat exchangers, such as air cooling and liquid cooling heat exchangers.

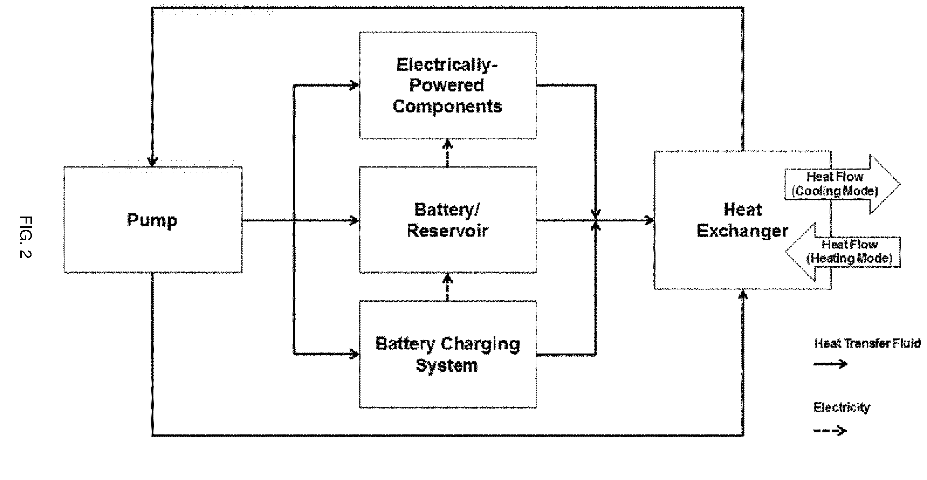

The circulation pipeline of the circulating system may flow the heat transfer fluid to other electrical componentry that generate thermal energy in need of dissipation within the electrical equipment or device. For example, as shown in FIG. 2 for immersion cooling of a battery, the heat transfer fluid may also be used for immersion cooling of electrical componentry being powered by the battery (e.g., an electric motor) and/or immersion cooling of electrical componentry employed in charging the battery. The heated heat transfer fluid flowing out of the container(s) or housing(s) of the various electrical componentry may be cooled in one or more heat exchangers and the cooled heat transfer fluid may be circulated back to the container(s) or housing(s).

The circulating system may also include a heat transfer fluid tank to store and/or maintain a volume of heat transfer fluid. For example, cooled heat transfer fluid from a heat exchanger may be pumped into the heat transfer fluid tank and from the heat transfer fluid tank back into the reservoir.

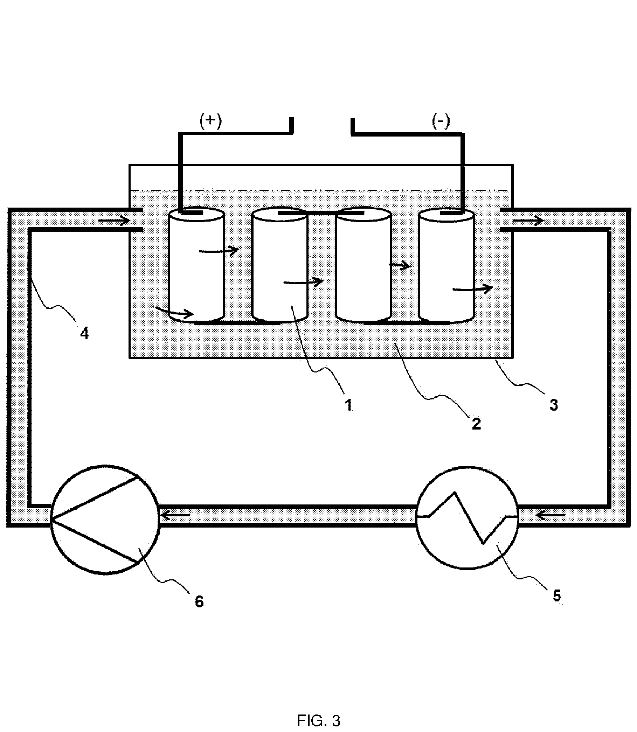

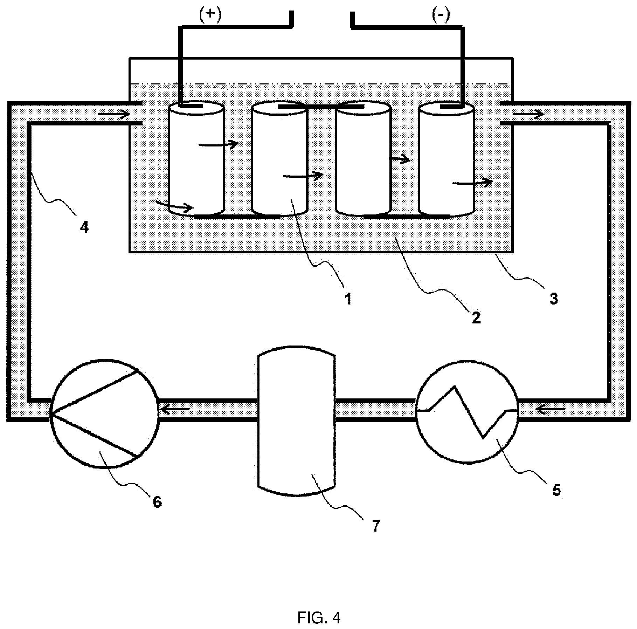

An example of an immersion cooling system in accordance with the present disclosure is shown in FIG. 3. The electrical componentry and reservoir are enlarged for purposes of illustration. The system comprises electrical componentry **1** (which, in this example, are battery cells of a battery module), a heat transfer fluid **2,** and a reservoir **3.** The electrical componentry **1** is at least partially immersed (in FIG. 3, fully immersed) in the heat transfer fluid **2** within the reservoir **3.** A circulating system comprising circulating pipeline **4,** a heat exchanger **5** and a pump **6** moves heated heat transfer fluid **2** out of the reservoir for cooling in heat exchanger **5** and the cooled heat transfer fluid is circulated back into the reservoir **3.** The circulating system may also include a heat transfer fluid tank **7,** as shown in FIG. 4.

The depicted flow of the heat transfer fluid **2** over and around the electrical componentry **1** as shown in FIG. 3 and FIG. 4 is exemplary only. The electrical componentry may be arranged within the reservoir in any way suitable for the type of electrical componentry and the intended application. Similarly, the flow of heat transfer fluid in and out of the reservoir and the flow through the reservoir may be accomplished in any manner suitable to ensure that the electrical componentry remains at least partially immersed in the heat transfer fluid. For example, the reservoir may include multiple inlets and outlets. The heat transfer fluid may flow from side to side, top to bottom or from bottom to top of the reservoir or a combination thereof, depending upon the desired orientation of the electrical componentry and the desired fluid flow of the system. The reservoir may include baffles for guiding the flow of heat transfer fluid over and/or around the electrical componentry. As a further example, the heat transfer fluid may enter the reservoir via a spray system, such as being sprayed on the electrical componentry from one or more top inlets of the reservoir.

While the system and method of the present disclosure is particularly useful for cooling of electrical componentry, such as battery modules, the presently disclosed immersion arrangement of the electrical componentry in the heat transfer fluid also allows the fluid to transfer heat to the electrical componentry to provide temperature control in cold environments. For example, the immersion cooling system may be equipped with a heater to heat the heat transfer fluid, such as shown in FIG. 2 where the heat exchanger may operate in a "heating mode." The heated fluid may transfer heat to the immersed electrical componentry to achieve and/or maintain a desired or optimal temperature for the electrical componentry, such as a desired or optimal temperature for battery charging.

Also disclosed is a method of cooling electrical componentry comprising at least partially immersing electrical componentry in a heat transfer fluid as described herein, and circulating the heat transfer fluid out of the reservoir, through a circulating pipeline of a circulation system, and back into the reservoir.

Further non-limiting disclosure is provided in the Examples that follow.

### EXAMPLES

### Procedures

Heat transfer fluids in accordance with the present disclosure, as well as heat transfer fluids of the Comparative Examples, were evaluated to determine their flash point (ASTM D92), kinematic viscosity measured at 40 °C (ASTM D445), pour point (ASTM D5950), and DC resistivity measured at 25 °C (IEC 60247).

### Example 1a

Butylated triphenylphosphate (butylated TPP), which is a mixture of triphenyl phosphate (in the range of 2.5 to 25 wt%) and a mixture of mono(butylphenyl) diphenyl phosphate, di(butylphenyl) monophenyl phosphate, and tributylphenyl phosphate (in the range of 75 to 98.5 wt%), available commercially under the name Durad^{®} 220B, and tris(2-ethylhexyl) phosphate, available commercially under the name Disflamoll^{®} TOF, at a 90:10 ratio by weight of butylated TPP to tris(2-ethylhexyl) phosphate was evaluated according to the procedures above.

### Example 1b

A mixture of butylated TPP and tris(2-ethylhexyl) phosphate at a 75:25 ratio by weight was evaluated according to the procedures above.

### Example 1c

A mixture of butylated TPP and tris(2-ethylhexyl) phosphate at a 50:50 ratio by weight was evaluated according to the procedures above.

### Example 1d

A mixture of butylated TPP and tris(2-ethylhexyl) phosphate at a 25:75 ratio by weight was evaluated according to the procedures above.

### Comparative Example 1

Trimethyl phosphate was evaluated according to the procedures above.

### Comparative Example 2

Tri-n-propyl phosphate was evaluated according to the procedures above.

### Comparative Example 3

Triisopropyl phosphate was evaluated according to the procedures above.

### Comparative Example 4

Tri-n-butyl phosphate was evaluated according to the procedures above.

| **Example** | **Viscosity at 40 C (x10⁻⁶ m²/s) (=cSt)** | **Pour Point (°C)** | **Flash Point (°C)** | **DC Resistivity at 25°C (GOhm-cm)** |
|---|---|---|---|---|
| 1a 90:10, butylated TPP: tris(2-ethylhexyl) phosphate | 32 | -31 | 248 | 8.46 |
| **1b** 75:25, butylated TPP: tris(2-ethylhexyl) phosphate | 23 | -38 | 232 | 12.4 |
| **1c** 50:50, butylated TPP: tris(2-ethylhexyl) phosphate | 15 | -50 | 224 | 25.7 |
| **1d** 25:75, butylated TPP: tris(2-ethylhexyl) phosphate | 11 | -60 | 217 | 57.4 |
| **CE 1** trimethyl phosphate | 1.3 | - | 107 | < 0.25 |
| **CE 2** tri-n-propyl phosphate | 3.3 | - | 123 | < 0.25 |
| **CE 3** triisopropyl phosphate | 1.7 | - | 102 | < 0.25 |
| **CE 4** tri-n-butyl phosphate | 2.5 | <-75 | 168 | < 0.25 |

As shown in the Table above, each of Examples 1a, 1b, 1c and 1d had a flash point > 200 °C, a pour point ≤ -30 °C, a kinematic viscosity at 40°C of less than 35×10⁻⁶ m²/s (35 cSt), often less than 25×10⁻⁶ m²/s (25 cSt), and a DC resistivity at 25°C of > 5 GOhm-cm. In contrast, Comparative Examples 1-4 each exhibited a low flash point well below 200 °C and a low DC resistivity relative to Examples 1a-1d.

## Claims

1. A heat transfer fluid for immersion cooling of electrical componentry comprising
(a) one or more than one phosphate ester of formula (I) 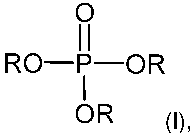 where each R is independently C₆₋₁₈ alkyl, preferably C₆₋₁₂ alkyl, and
(b) one or more than one phosphate ester of formula (II) 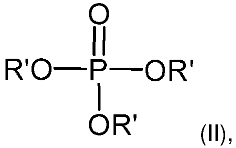 where each R' is independently chosen from unsubstituted phenyl and C₁₋₁₂ alkyl-substituted phenyl.

2. The heat transfer fluid of claim 1, wherein the ratio by weight of the phosphate ester component (a) to the phosphate ester component (b) is from 10:1 to 1:10, preferably from 5:1 to 1:5.

3. The heat transfer fluid of claim 1, wherein component (b) comprises a mixture of phosphate esters of formula (II), preferably at least two from the group chosen from mono(alkylphenyl) diphenyl phosphate, di(alkylphenyl) monophenyl phosphate, tri(alkylphenyl) phosphate, and triphenyl phosphate.

4. The heat transfer fluid of claim 3, wherein the mixture of phosphate esters of formula (II) comprises
(a) from about 30 wt% to about 95 wt% mono(alkylphenyl) diphenyl phosphate,
(b) from about 5 wt% to about 50 wt% di(alkylphenyl) monophenyl phosphate,
(c) from about 0 wt% to about 20 wt% of tri(alkylphenyl) phosphate, and
(d) from about 0 wt% to about 30 wt% of triphenyl phosphate,
where the weight percentages are based on the total weight of all phosphate esters of formula (II).

5. The heat transfer fluid of claim 4, wherein the mixture of phosphate esters of formula (II) comprises
(a) from about 60 wt% to about 95 wt% mono(alkylphenyl) diphenyl phosphate,
(b) from about 5 wt% to about 30 wt% di(alkylphenyl) monophenyl phosphate,
(c) from about 0 wt% to about 5 wt% tri(alkylphenyl) phosphate, and
(d) from about 0 wt% to about 15 wt% triphenyl phosphate,
where the weight percentages are based on the total weight of all phosphate esters of formula (II).

6. The heat transfer fluid of claim 4, wherein the mixture of phosphate esters of formula (II) comprises
(a) from about 30 to about 60 wt% mono(alkylphenyl) diphenyl phosphate,
(b) from about 20 to about 50 wt% di(alkylphenyl) monophenyl phosphate,
(c) from about 2 to about 20 wt% tri(alkylphenyl) phosphate, and
(d) from about 5 to about 30 wt% triphenyl phosphate,
where the weight percentages are based on the total weight of all phosphate esters of formula (II).

7. The heat transfer fluid of any one of the preceding claims, wherein the phosphate ester components (a) and (b) collectively make up at least 70% by weight, preferably at least 90% by weight, of the heat transfer fluid.

8. An immersion cooling system comprising
electrical componentry, preferably a battery,
the heat transfer fluid according to any one of claims 1-7, and
a reservoir, wherein the electrical componentry is at least partially immersed in the heat transfer fluid within the reservoir, and
a circulating system capable of circulating the heat transfer fluid out of the reservoir, through a circulating pipeline of the circulating system, and back into the reservoir.

9. The immersion cooling system of claim 8, wherein the battery is a battery module for an electric vehicle.

10. The immersion cooling system of claim 8 or 9, wherein the circulating system comprises a pump and a heat exchanger.

11. The immersion cooling system of claim 10, wherein the circulating system further comprises a heat transfer fluid tank.

12. A method of cooling electrical componentry comprising
providing an immersion cooling system comprising electrical componentry, the heat transfer fluid according to any one of claims 1-7, and a reservoir, wherein the electrical componentry is at least partially immersed in the heat transfer fluid within the reservoir, and
circulating the heat transfer fluid out of the reservoir, through a circulating pipeline of a circulation system, and back into the reservoir.

13. The method of claim 12, wherein the electrical componentry comprises a battery, preferably a battery module for an electric vehicle.

14. The method of claim 12 or 13, wherein the circulating system comprises a pump and a heat exchanger, and the step of circulating the heat transfer fluid comprises pumping the heat transfer fluid out of the reservoir through a circulating pipeline, through the heat exchanger, and back into the reservoir.

15. The method of claim 14, wherein the circulating system further comprises a heat transfer fluid tank, and the heat transfer fluid flowing through the heat exchanger is pumped into the heat transfer fluid tank and from the heat transfer fluid tank back into the reservoir.

## Patentansprüche

1. Wärmeträgerfluid zur Tauchkühlung von elektrischen Komponenten, umfassend
(a) einen oder mehr als einen Phosphatester der Formel (I) 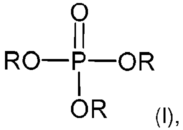 wobei jedes R unabhängig C₆₋₁₈-Alkyl ist, vorzugsweise C₆₋₁₂-Alkyl, und
(b) einen oder mehr als einen Phosphatester der Formel (II) 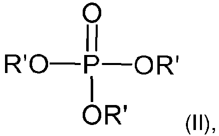 wobei jedes R' unabhängig ausgewählt ist aus unsubstituiertem Phenyl und C₁₋₁₂-Alkyl-substituiertem Phenyl.

2. Wärmeträgerfluid nach Anspruch 1, wobei das Gewichtsverhältnis der Phosphatesterkomponente (a) zu der Phosphatesterkomponente (b) von 10:1 bis 1:10, vorzugsweise von 5:1 bis 1:5, beträgt.

3. Wärmeträgerfluid nach Anspruch 1, wobei Komponente (b) ein Gemisch von Phosphatestern der Formel (II) umfasst, vorzugsweise wenigstens zwei aus der Gruppe ausgewählt aus Mono(alkylphenyl)diphenylphosphat, Di(alkylphenyl)monophenylphosphat, Tri(alkylphenyl)phosphat und Triphenylphosphat.

4. Wärmeträgerfluid nach Anspruch 3, wobei das Gemisch von Phosphatestern der Formel (II) umfasst
(a) von etwa 30 Gew.-% bis etwa 95 Gew.-% Mono(alkylphenyl) diphenylphosphat,
(b) von etwa 5 Gew.-% bis etwa 50 Gew.-% Di(alkylphenyl)monophenylphosphat,
(c) von etwa 0 Gew.-% bis etwa 20 Gew.-% Tri(alkylphenyl)phosphat und
(d) von etwa 0 Gew.-% bis etwa 30 Gew.-% Triphenylphosphat,
wobei die Gewichtsprozentwerte auf das Gesamtgewicht aller Phosphatester der Formel (II) bezogen sind.

5. Wärmeübertragungsfluid nach Anspruch 4, wobei das Gemisch von Phosphatestern der Formel (II) umfasst
(a) von etwa 60 Gew.-% bis etwa 95 Gew.-% Mono(alkylphenyl) diphenylphosphat,
(b) von etwa 5 Gew.-% bis etwa 30 Gew.-% Di(alkylphenyl)monophenylphosphat,
(c) von etwa 0 Gew.-% bis etwa 5 Gew.-% Tri(alkylphenyl)phosphat und
(d) von etwa 0 Gew.-% bis etwa 15 Gew.-% Triphenylphosphat,
wobei die Gewichtsprozentwerte auf das Gesamtgewicht aller Phosphatester der Formel (II) bezogen sind.

6. Wärmeübertragungsfluid nach Anspruch 4, wobei das Gemisch von Phosphatestern der Formel (II) umfasst
(a) von etwa 30 bis etwa 60 Gew.-% Mono(alkylphenyl) diphenylphosphat,
(b) von etwa 20 bis etwa 50 Gew.-% Di(alkylphenyl)monophenylphosphat,
(c) von etwa 2 bis etwa 20 Gew.-% Tri(alkylphenyl)phosphat und
(d) von etwa 5 bis etwa 30 Gew.-% Triphenylphosphat,
wobei die Gewichtsprozentwerte auf das Gesamtgewicht aller Phosphatester der Formel (II) bezogen sind.

7. Wärmeträgerfluid nach einem der vorstehenden Ansprüche, wobei die Phosphatesterkomponenten (a) und (b) zusammen wenigstens 70 Gew.-%, vorzugsweise wenigstens 90 Gew.-%, des Wärmeträgerfluids bilden.

8. Tauchkühlsystem umfassend
elektrische Komponenten, vorzugsweise eine Batterie,
das Wärmeträgerfluid nach einem der Ansprüche 1-7 und ein Reservoir, wobei die elektrischen Komponenten wenigstens teilweise in dem Wärmeträgerfluid in dem Reservoir eingetaucht sind, und
ein Umlaufsystem, das fähig ist, das Wärmeträgerfluid aus dem Vorratsbehälter durch eine Umlaufleitung des Umlaufsystems zurück in den Vorratsbehälter zu zirkulieren

9. Tauchkühlsystem nach Anspruch 8, wobei die Batterie ein Batteriemodul für ein Elektrofahrzeug ist.

10. Tauchkühlsystem nach Anspruch 8 oder 9, wobei das Umlaufsystem eine Pumpe und einen Wärmetauscher umfasst.

11. Tauchkühlsystem nach Anspruch 10, wobei das Umlaufsystem ferner einen Wärmeträgerfluidtank umfasst.

12. Verfahren zum Kühlen elektrischer Komponenten, umfassend
Bereitstellen eines Tauchkühlsystems, das elektrische Komponenten, das Wärmeträgerfluid nach einem der Ansprüche 1-7 und ein Reservoir umfasst, wobei die elektrischen Komponenten wenigstens zum Teil in das Wärmeträgerfluid in dem Reservoir eingetaucht sind, und Zirkulieren des Wärmeträgerfluids aus dem Reservoir durch eine Umlaufleitung eines Umlaufsystems und zurück in das Reservoir.

13. Verfahren nach Anspruch 12, wobei die elektrische Komponente eine Batterie umfasst, vorzugsweise ein Batteriemodul für ein Elektrofahrzeug.

14. Verfahren nach Anspruch 12 oder 13, wobei das Umlaufsystem eine Pumpe und einen Wärmetauscher umfasst und der Schritt des Zirkulierens des Wärmeträgerfluids Pumpen des Wärmeträgerfluids aus dem Reservoir durch eine Umlaufleitung, durch den Wärmetauscher und zurück in das Reservoir umfasst.

15. Verfahren nach Anspruch 14, wobei das Umlaufsystem ferner einen Wärmeträgerfluidtank umfasst und das Wärmeträgerfluid, das durch den Wärmetauscher strömt, in den Wärmeträgerfluidtank und von dem Wärmeträgerfluidtank zurück in das Reservoir gepumpt wird.

## Revendications

1. Fluide caloporteur pour le refroidissement par immersion de composants électriques comprenant
A) un ou plusieurs esters de phosphate de formule (I) 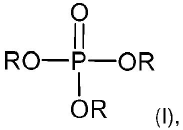 où chaque R représente indépendamment un alkyle en C₆₋₁₈, de préférence un alkyle en C₆₋₁₂, et
(b) un ou plusieurs esters de phosphate de formule (II) 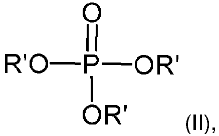 où chaque R' est indépendamment choisi parmi un phényle non substitué et un phényle substitué par un alkyle en C₁₋₁₂.

2. Fluide caloporteur de la revendication 1, dans lequel le rapport pondéral entre le composant ester de phosphate (a) et le composant ester de phosphate (b) est de 10/1 à 1/10, de préférence de 5/1 à 1/5.

3. Fluide caloporteur de la revendication 1, dans lequel le composant (b) comprend un mélange d'esters de phosphate de formule (II), de préférence d'au moins deux du groupe choisi parmi les phosphates de mono(alkylphényl) diphényle, les phosphates de di(alkylphényl)monophényle, les phosphates de tri(alkylphényle) et le phosphate de triphényle.

4. Fluide caloporteur de la revendication 3, dans lequel le mélange d'esters de phosphate de formule (II) comprend
(a) environ 30 % en poids à environ 95 % en poids de phosphate de mono(alkylphényl)diphényle,
(b) environ 5 % en poids à environ 50 % en poids de phosphate de di(alkylphényl)monophényle,
(c) environ 0 % en poids à environ 20 % en poids de phosphate de tri(alkylphényle), et
(d) environ 0 % en poids à environ 30 % en poids de phosphate de triphényle,
où les pourcentages pondéraux se rapportent au poids total de tous les esters de phosphate de formule (II).

5. Fluide de transfert de chaleur de la revendication 4, dans lequel le mélange d'esters de phosphate de formule (II) comprend
(a) environ 60 % en poids à environ 95 % en poids de phosphate de mono(alkylphényl)diphényle,
(b) environ 5 % en poids à environ 30 % en poids de phosphate de di(alkylphényl)monophényle,
(c) environ 0 % en poids à environ 5 % en poids de phosphate de tri(alkylphényle), et
(d) environ 0 % en poids à environ 15 % en poids de phosphate de triphényle,
où les pourcentages pondéraux se rapportent au poids total de tous les esters de phosphate de formule (II).

6. Fluide de transfert de chaleur de la revendication 4, dans lequel le mélange d'esters de phosphate de formule (II) comprend
(a) environ 30 à environ 60 % en poids de phosphate de mono(alkylphényl) diphényle,
(b) environ 20 à environ 50 % en poids de phosphate de di(alkylphényl)monophényle,
(c) environ 2 à environ 20 % en poids de phosphate de tri(alkylphényle), et
(d) environ 5 à environ 30 % en poids de phosphate de triphényle,
où les pourcentages pondéraux se rapportent au poids total de tous les esters de phosphate de formule (II).

7. Fluide caloporteur de l'une quelconque des revendications précédentes, les composants ester de phosphate (a) et (b) constituant collectivement au moins 70 % en poids, de préférence au moins 90 % en poids, du fluide caloporteur.

8. Système de refroidissement par immersion comprenant des composants électriques, de préférence une batterie,
le fluide caloporteur selon l'une quelconque des revendications 1 à 7, et
un réservoir, les composants électriques étant au moins partiellement immergés dans le fluide caloporteur à l'intérieur du réservoir, et
un système de circulation pouvant faire circuler le fluide caloporteur hors du réservoir, à travers une conduite de circulation du système de circulation, et de nouveau jusqu'à l'intérieur du réservoir.

9. Système de refroidissement par immersion de la revendication 8, dans lequel la batterie est un module de batterie pour un véhicule électrique.

10. Système de refroidissement par immersion de la revendication 8 ou 9, dans lequel le système de circulation comprend une pompe et un échangeur de chaleur.

11. Système de refroidissement par immersion de la revendication 10, dans lequel le système de circulation comprend en outre une cuve de fluide caloporteur.

12. Procédé de refroidissement de composants électriques comprenant
l'obtention d'un système de refroidissement par immersion comprenant des composants électriques, le fluide caloporteur selon l'une quelconque des revendications 1 à 7 et un réservoir, les composants électriques étant au moins partiellement immergés dans le fluide caloporteur à l'intérieur du réservoir, et
la circulation du fluide caloporteur hors du réservoir, à travers une conduite de circulation d'un système de circulation, et de nouveau jusqu'à l'intérieur du réservoir.

13. Procédé de la revendication 12, dans lequel les composants électriques comprennent une batterie, de préférence un module de batterie pour un véhicule électrique.

14. Procédé de la revendication 12 ou 13, dans lequel le système de circulation comprend une pompe et un échangeur de chaleur, et l'étape de circulation du fluide caloporteur comprend le pompage du fluide caloporteur hors du réservoir à travers une conduite de circulation, à travers l'échangeur de chaleur, et de nouveau jusqu'à l'intérieur du réservoir.

15. Procédé de la revendication 14, dans lequel le système de circulation comprend en outre une cuve de fluide caloporteur, et le fluide caloporteur s'écoulant à travers l'échangeur de chaleur est pompé jusqu'à l'intérieur de la cuve de fluide caloporteur et depuis la cuve de fluide caloporteur de nouveau jusqu'à l'intérieur du réservoir.
